# EUROPÄISCHE PATENTANMELDUNG

(11) **EP 1 439 088 A1**
(43) Veröffentlichungstag der Anmeldung: **21.07.2004**
(21) Anmeldenummer: 03000862.7
(22) Anmeldetag: 15.01.2003
(51) Int. Cl.: B60L 5/00, B61B 13/12, H02J 5/00

(54) **Schienenanordnung, Wagen und Transportanlage, zur kontaklosen Stromübertragung**

(71) Anmelder: Metso Paper AG, 2800 Delémont (CH)
(72) Erfinder: Baumgartner, Peter, 4242 Laufen (CH); Patthey, Claude, 1165 Allaman (CH); Brändli, Walter, 4242 Laufen (CH); Voisard, Jean-Pierre, 2853 Courfaivre (CH)
(74) Vertreter: Wagner, Wolfgang, Dr. Phil., Dipl.-Phys.

(57) **Zusammenfassung**

Eine Schienenanlage weist aufeinanderfolgende Primärwicklungsanordnungen auf, welche von Generatorschaltungen, die von einer gemeinsamen Piloteinheit ein Pilotsignal einer Grundfrequenz von 185kHz erhalten, mit nach Frequenz und Phasenlage demselben entsprechenden Speisespannungen versorgt werden, welche von einem Wagen über eine induktiv an jeweils mindestens eine der Primärwicklungsanordnungen gekoppelte Sekundärwicklungsanordnung (61) aufgenommen wird, welche über einen Gleichrichter (45) und eine Versorgungsschaltung einen Antriebsmotor (36) mit elektrischer Energie versorgt. Eine Ballastschaltung (63) nimmt dabei überschüssige Leistung auf, so dass die Leistungsaufnahme des Wagens im wesentlichen konstant bleibt. Die Resonanzfrequenz eines eine Primärwicklungsanordnung umfassenden Primärschwingkreises ist zur Begrenzung der Energieaufnahme leerer Schienabschnitte gegenüber der Grundfrequenz jeweils leicht verschoben, während zwecks Erzielung einer hohen Energieübertragung auf den auf dem Schienenabschnitt befindlichen Wagen die Resonanzfrequenz des den Primärschwingkreis und den induktiv mit ihm gekoppelten, aus der Sekundärwicklunsanordnung (61) und einem Kondensator (51) bestehenden Sekundärschwingkreis des Wagens umfassenden Systems weitgehend der Grundfrequenz entspricht.

## Beschreibung

### Technisches Gebiet

Die Erfindung betrifft eine Schienenanordnung und einen Wagen sowie eine aus einer Schienenanordnung und einem oder mehreren Wagen bestehende Transportanlage, wie sie z.B. zum Transport verhältnismässig schwerer Artikel in einem Lager eingesetzt werden, beispielsweise von Papierrollen im Rollenkeller einer Druckerei.

### Stand der Technik

Eine gattungsgemässe Transportanlage ist aus EP-A-0 587 015 bekannt. Sie umfasst eine Schienenanordnung und schienengeführte antreibbare Wagen für den Transport von Papierrollen zwischen Lager, Stationen für die Klebestellenvorbereitung, Rollenständern und eventuell weiteren Vorrichtungen. Dabei wird ein Wagen jeweils durch Ketten angetrieben, mit denen er durch eine Mitnehmerleiste in reibschlüssiger Verbindung steht. Die einzelnen Ketten sind geschlossen und separat angetrieben und erstrecken sich jeweils über einen geraden Bahnabschnitt. Die unabhängige Steuerung verhältnismässig vieler Wagen erfordert eine Aufteilung des Systems in verhältnismässig viele derartige Bahnabschnitte, da Wagen, die sich auf dem gleichen Bahnabschnitt befinden, nicht unabhängig voneinander bewegbar sind.

### Darstellung der Erfindung

Der Erfindung liegt die Aufgabe zu Grunde, eine flexiblere, einfacher aufgebaute und preisgünstigere Transportanlage und ihre wesentlichen Komponenten anzugeben. Insbesondere soll die unabhängige Steuerung verhältnismässig vieler Wagen unabhängig von ihren relativen Positionen möglich sein.

Diese Aufgabe wird durch die Merkmale in den Kennzeichen der Ansprüche 1, 14 und 25 gelöst. Die erfindungsgemässe Transportanlage ist einfach aufgebaut. Für den Antrieb der Wagen sind keine beweglichen Teile an der Schienenanordnung erforderlich. Die Wagen sind voneinander unabhängig und können von einer Zentrale aus gesteuert werden, ohne dass unerwünschte gegenseitige Beeinflussung oder Kopplung ihrer Bewegungen aufträten. Durch die erfindungsgemässe Ausbildung der Schienenanordnung und des Wagens sowie ihre Abstimmung im Rahmen der Transportanlage wird sichergestellt, dass auf dem Wagen genug elektrische Energie zur Verfügung steht, ohne dass Kontakte, Kabel oder Energiespeicher eingesetzt werden müssten.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine Draufsicht auf eine erfindungsgemässe Transportanlage,
- Fig. 2a: eine teilweise Unteransicht eines erfindungsgemässen Wagens,
- Fig. 2b: etwas vereinfacht einen Längsschnitt durch den Wagen gemäss B-B in Fig. 2a,
- Fig. 2c: vergrössert einen Ausschnitt aus einem Längsschnitt ähnlich Fig. 2b,
- Fig. 3a: einen Querschnitt durch einen Schienenabschnitt einer erfindungsgemässen Schienenanordnung und einen erfindungsgemässen Wagen entsprechend A-A in Fig. 3b,
- Fig. 3b: einen waagrechten Schnitt durch den Schienenabschnitt von Fig. 3a, entsprechend B-B, ohne Wagen,
- Fig. 4: schematisch das Schaltbild eines Teils einer erfindungsgemässen Schienenanordnung,
- Fig. 5: das Schaltbild einer Komponente aus dem Schaltbild gemäss Fig. 4,
- Fig. 6: schematisch das Schaltbild eines erfindungsgemässen Wagens und
- Fig. 7: das Schaltbild einer Komponente aus dem Schaltbild gemäss Fig. 6.

### Wege zur Ausführung der Erfindung

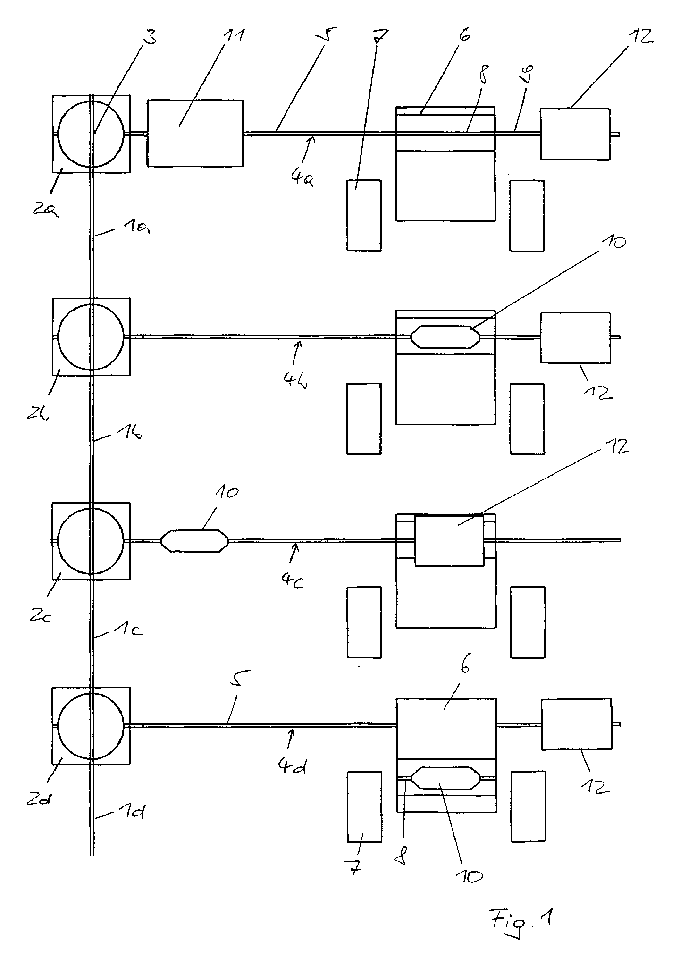

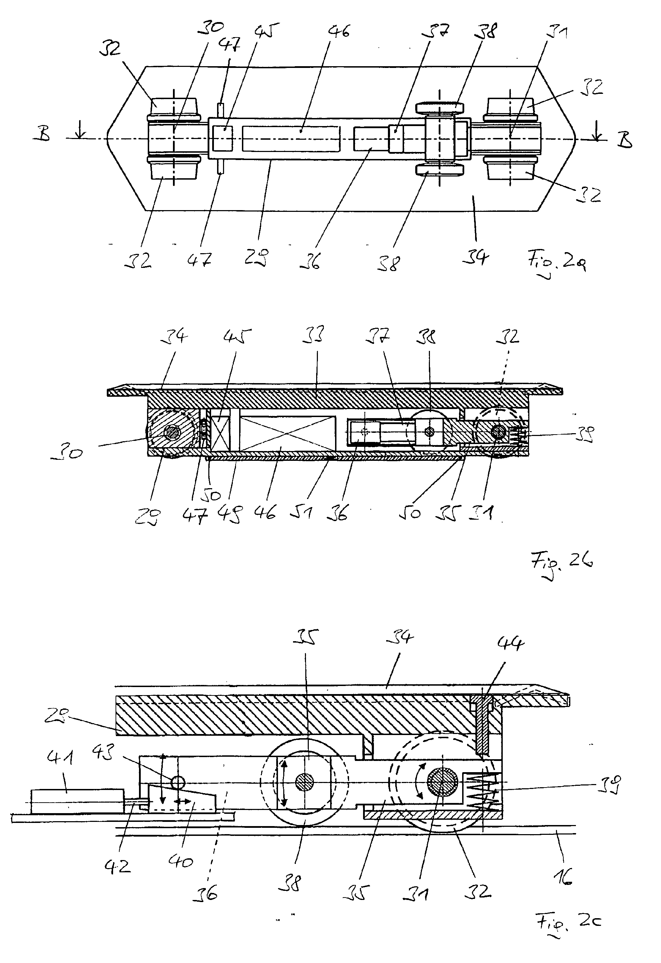

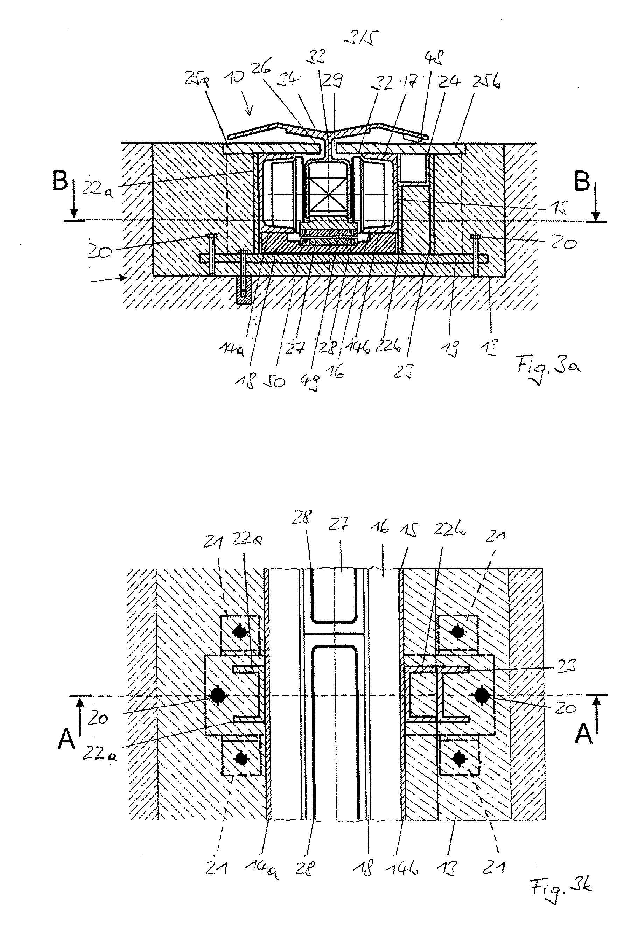

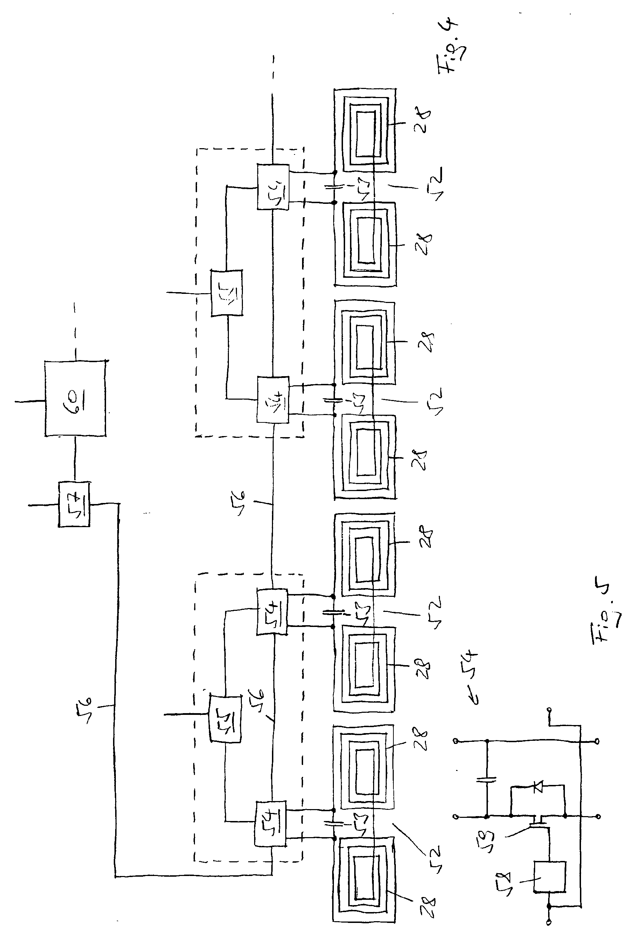

Die erfindungsgemässe Schienenanordnung gemäss Fig. 1 umfasst mehrere in einer Linie aufeinanderfolgende Schienenabschnitte 1a,b,c,d, die durch Drehscheiben 2a,b,c,d verbunden sind, welche jeweils einen Schienenabschnitt 3 tragen. An jeder der Drehscheiben 2a,b,c,d zweigt rechtwinklig zu den Schienenabschnitten 1a,b,c,d jeweils eine Stichbahn 4a;b;c;d ab mit einem ersten Schienenabschnitt 5, der zu einer Schiebebühne 6 führt, welche einen seitlich zu einem Rollenständer 7 einer Druckanlage verschiebbaren zweiten Schienenabschnitt 8 trägt sowie einem an die Schiebebühne 6 anschliessenden dritten Schienenabschnitt 9. Auf jeder der Stichbahnen 4 befinden sich in verschiedenen Positionen zwei erfindungsgemässe Wagen 10, von denen der eine auf Stichbahn 4a eine Papierrolle 11 trägt und der zweite jeweils einen Abfallbehälter 12.

Ein Wagen 10 kann z.B. aus einem Lager (nicht dargestellt) über den Schienenabschnitt 1d und die Drehscheibe 2d und die unterste Stichbahn 4d eine Papierrolle auf die entsprechende Schiebebühne 6 bringen, wo er mit dem Schienenabschnitt 8 zum Rollenständer 7 verschoben wird, wo die Papierrolle von demselben aufgenommen wird. Der leere Wagen 10 (in Fig. 1 gezeigter Zustand) wird dann wiederum mit dem Schienenabschnitt 8 zurückverschoben und kann über den Schienenabschnitt 5, die Drehscheibe 2d und den Schienenabschnitt 1d wieder ins Lager zurückfahren. Auf derartigen Anlagen können Papierrollen bis zu einem Gewicht von z.B. 2'000kg transportiert werden.

Die Schienenabschnitte 1a,b,c,d und jeweils 5, 9 sind unterflur verlegt. Dazu ist (s. v.a. Fig. 3a,b) im Boden, der in der Regel aus Beton besteht, eine Grube 13 rechteckigen Querschnitts angelegt, in der der Schienenabschnitt verlegt und mit Beton vergossen ist. Ein Schienenabschnitt umfasst jeweils zwei waagrecht verlegte U-Profile 14a,b, deren offene Seiten gegeneinander weisen. Jedes der U-Profile 14a,b weist einen senkrechten Steg 15 auf, an welchen unten ein etwa waagrechter unterer Schenkel 16 anschliesst und oben ein entsprechender oberer Schenkel 17. Ein Kunststoffprofil 18, das auf in Abständen von z.B. 0,5m angeordneten Schwellen 19 aufliegt, drückt von unten gegen die U-Profile 14a,b. Die Schwellen 19 sind beidseits durch Stellschrauben 20 auf dem Grund der Grube 13 abgestützt und ausserdem jeweils durch Winkel 21 fixiert, die mit dem Boden verdübelt sind. Mittels der Schrauben kann während der Erstellung des Schienenabschnitts die Höhe der Schwellen auch bei unregelmässigem Boden auf den jeweils erforderlichen Wert eingestellt werden. Anschliessend erfolgt das Verdübeln der Winkel 21 mit dem Boden.

Die Schwelle 19 trägt jeweils zwei senkrechte, nach aussen offene Stützprofile 22a,b von U-förmigem Querschnitt, an welchen die Aussenseiten der U-Profile 14a;b anliegen. Das Stützprofil 22a reicht bis zum oberen Rand des U-Profils 14a, während das Stützprofil 22b etwas kürzer ist. An die Aussenseite des letzteren schliesst allerdings ein weiteres Stützprofil 23 an, das ebenfalls bis zur Höhe des Randes des U-Profils 14a,b reicht, von dem es etwas beabstandet ist. Zwischen dem Steg 15 desselben und dem Stützprofil 23 liegt oberhalb des Stützprofils 22b ein durchgehendes oben offenes Längsprofil 24 U-förmigen Querschnitts, das einen Kabelkanal bildet. Auf den oberen Schenkeln 16 des U-Profils 14a bzw. 14b und den oberen Enden der Stützprofile 22a bzw. 22b und 23 sind waagrechte Abdeckplatten 25a,b abgestützt, deren Oberseiten auf der Höhe des die Grube 13 umgebenden Bodens liegen und die lediglich mittig zwischen den U-Profilen 14a,b einen ca. 25mm breiten Spalt 26 frei lassen.

In einer Ausnehmung an der Oberseite des Kunststoffprofils 18 sind zwischen den unteren Schenkeln 16 der U-Profile 14a,b und etwas tiefer als diese aufeinanderfolgend rechteckige Grundplatten 27 aus Kunststoff angeordnet. In jeder derselben ist eine Primärwicklung 28 versenkt verlegt, welche mit geringem Abstand dem Rand der Grundplatte 27 folgt. Die Grundplatten 27 sind jeweils ca. 100mm breit und zwischen 0,8m und 2m lang. Die den beiden Seitenrändern der Grundplatte 27 folgenden Längsabschnitte der Primärwicklung 28 weisen jeweils einen Abstand von ca. 70mm auf, während die Länge der letzteren jeweils wenig geringer ist als die der Grundplatte 27. Die U-Profile 14a,b, Schwellen 19, Stützprofile 22a,b, 23 und Abdeckplatten 25a,b bestehen aus Baustahl. Mit Ausnahme des zwischen den U-Profilen 14a,b liegenden Bereichs und des Kabelkanals ist die Grube 13 vollständig mit Beton ausgegossen. Der Schienenabschnitt 8 auf der Schiebebühne 6 liegt dagegen frei. An der Schienenanordnung können Referenzpositionen markiert sein, vorzugsweise indem an den Innenseiten der Stege 15 der U-Profile 14a,b dort Strichcodes angebracht sind.

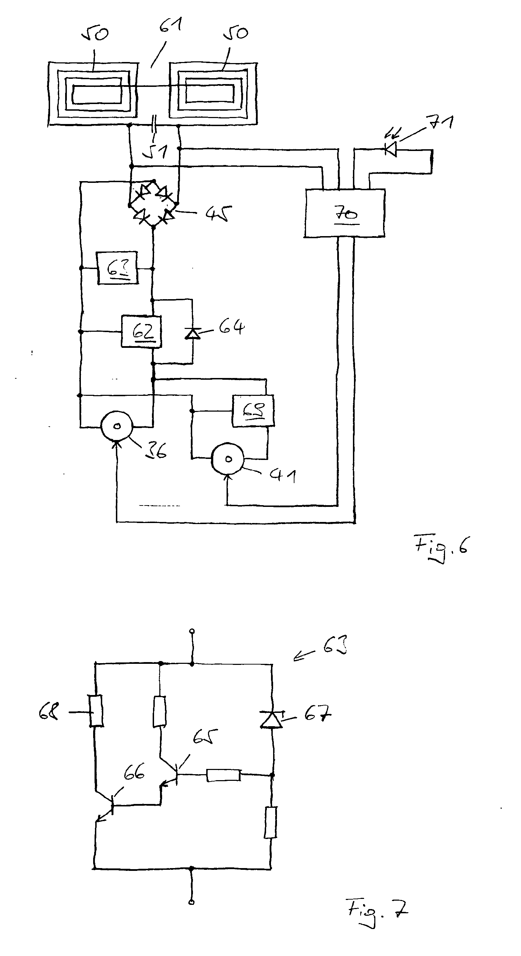

Der erfindungsgemässe Wagen 10 (s. Fig. 2a,b,c, 3a) weist ein etwa quaderförmiges Gehäuse 29 auf, in dessen Endbereichen Achsen 30, 31 drehbar gelagert sind, welche beidseits Räder 32 mit Spurkränzen tragen. An der Oberseite des Gehäuses 29 ist ein senkrechter, sich über dessen ganze Länge erstreckender Steg 33 angebracht, der eine Mulde 34 zur Aufnahme einer Papierrolle 11 (Fig. 1) trägt. Eine Wippe 35 ist um die zweite Achse 31 kippbar im Gehäuse 29 gelagert. Sie trägt an ihrem inneren Ende ein Schutzrohr aus Stahl, in dem ein elektrischer Antriebsmotor 36 vor elektromagnetischen Störungen geschützt angeordnet ist. Zwischen dem Antriebsmotor 36 und der Achse 31 ist eine Antriebsachse in der Wippe 35 drehbar gelagert, die mit dem Antriebsmotor 36 über ein Getriebe 37, das aus einem dreistufigen Planetengetriebe und einem Winkelgetriebe besteht, verbunden ist und an ihren Enden zwei Antriebsräder 38 trägt.

Durch eine auf ihr äusseres Ende einwirkende, am Gehäuse 29 abgestützte Andrückfeder 39 (Fig. 2c), eine Druckfeder, wird auf die Wippe 35 eine Kraft ausgeübt, die die Antriebsräder 38 gegen die Innenseiten der unteren Schenkel 16 der U-Profile 14a,b (Fig. 3a) drückt. Durch einen Keil 40, der von einem Umstellmotor 41 über eine selbsthemmende Spindel 42 vor- und zurückverschoben werden kann und der mit einer Rolle 43 an der Aussenseite des Schutzrohrs zusammenwirkt, kann die Wippe 35 gegen die Kraft der Andrückfeder 39 im Uhrzeigersinn gekippt und dadurch die Antriebsräder 38 ausser Eingriff mit der Schienenanordnung gebracht werden. Mittels einer von der Oberseite der Mulde 34 zugänglichen Feststellschraube 44 kann die Wippe 35 manuell, also auch bei Stromausfall, in einer Stellung fixiert werden, in der die Antriebsräder 38 ausser Eingriff sind.

Der Wagen 10 trägt eine Bordelektronik, welche insbesondere einen Gleichrichter 45 und eine Steuerkarte 46 umfasst. Hinter der ersten Achse 30 ist eine Querwand angeordnet, welche zwei jeweils nach der Seite, und zwar einander entgegengesetzt gerichtete Strichcodeleser 47 trägt. Das Gehäuse 29 wird (Fig. 3a) vom zwischen den U-Profilen 14a,b liegenden Bereich eines Schienenabschnittes aufgenommen, wobei die Räder 32 auf den Oberseiten der unteren Schenkel 15 der U-Profile 14a,b abrollen. Der Steg 33 ragt dabei durch den Spalt 26. Lediglich die Mulde 34 liegt oberhalb der Abdeckplatten 25a,b und damit des Fussbodenniveaus. An ihrer Unterseite, ebenfalls oberhalb des Fussbodenniveaus, ist ein Infrarotempfänger 48 angebracht (Fig. 3a).

Der Antriebsmotor 36 ist ein elektronisch kommutierter Gleichstrommotor. Die Position seines Rotors wird durch drei Hall-Sonden überwacht. Die Untersetzung durch das Getriebe 37 beträgt 1:100, die Position des Wagens 10 kann mit einer Genauigkeit von ca. 3mm gesteuert werden. Zur Stromversorgung ist an der Unterseite des Gehäuses 29 eine Trägerplatte 49 angeordnet, in der Sekundärwicklungen 50 eingebettet sind, zu denen ein Kondensator 51 parallel liegt. Der Wagen 10 wird über die bereits erwähnten Primärwicklungen 28 in den Schienenabschnitten und die mit ihnen induktiv gekoppelte Sekundärwicklungsanordnung 48 mit elektrischer Energie versorgt.

Wie bereits im Zusammenhang mit Fig. 3a,b erwähnt und in Fig. 4 schematisch dargestellt, sind in einem Schienenabschnitt in Längsrichtung aufeinanderfolgend Primärwicklungen 28 verlegt, von denen jeweils zwei zu einer Primärwicklungsanordnung 52 zusammengefasst und in Reihe geschaltet sind. Zu jeder Primärwicklungsanordnung 52 liegt ein Kondensator 53 parallel, so dass sie zusammen einen Primärschwingkreis bilden. Auch die Drehscheiben 2a,b,c,d und die Schienenabschnitte 8 der Schiebebühnen 6 tragen jeweils eine derartige Primärwicklungsanordnung. Der Wicklungssinn aller Primärwicklungen 28 ist gleich. Jede Primärwicklung 28 besteht in der Regel aus ca. zehn Windungen, doch können es auch weniger sein.

Jede der Primärwicklungsanordnungen 52 wird von einer Generatorschaltung 54 mit einer Speisespannung versorgt, einer Wechselspannung von höchstens 1'000V, deren Grundfrequenz zwischen 100kHz und 300kHz liegt. Sie beträgt im Beispiel 185kHz. Zwei Generatorschaltungen 54 sind jeweils mit einem Speisegerät 55, das aus dem Netzstrom von 230V eine Gleichspannung von 300V erzeugt, in einem Gehäuse vereinigt. Es ist jedoch auch möglich, etwa nur in jedem zweiten Gehäuse ein Speisegerät vorzusehen, das dann auch die Generatorschaltungen in einem weiteren Gehäuse mit Gleichspannung versorgt. Die Generatorschaltungen 54 sind über die Schienenanordnung verteilt, derart, dass die jeweils abgeschirmte Leitung, die eine Generatorschaltung 54 mit der jeweiligen Primärwicklungsanordnung 52 verbindet, nicht mehr als höchstens 5m lang ist. Sämtliche Generatorschaltungen 54 werden über einen Bus 56 von einer Piloteinheit 57 gesteuert, welche als Pilotsignal ein Sinussignal von 185kHz erzeugt. Dieses Signal kann etwa mittels eines Schwingquarzes hergestellt werden.

Jede Generatorschaltung 54 umfasst (Fig. 5) eine Treiberschaltung 58, die das Pilotsignal in ein Rechtecksignal umsetzt und einen Feldeffekt-Transistor 59 ansteuert, der die vom Speisegerät 55 gelieferte Gleichspannung mit der Frequenz des Pilotsignals abwechselnd sperrt und durchschaltet. Die Piloteinheit 57 wird ihrerseits von einer Steuereinheit 60 gesteuert, z.B. einem PC, der auch Steuersignale an dieselbe weiterleitet, was zu einer entsprechenden Modulation des Pilotsignals führt, wie weiter unten näher erläutert werden wird.

Der Wagen 10 weist (Fig. 6) eine Sekundärwicklungsanordnung 61 auf, welche im Prinzip gleich aufgebaut ist wie eine der Primärwicklungsanordnungen 52 und aus zwei in Längsrichtung aufeinanderfolgenden, gleichsinnig gewickelten Sekundärwicklungen 50 besteht und der der Kondensator 51 parallelgeschaltet ist und mit ihr zusammen einen Sekundärschwingkreis bildet. Demselben nachgeschaltet sind der Gleichrichter 45 und weiter eine Versorgungsschaltung mit einem Dreipunktregler 62, der den Antriebsmotor 36 mit einer Gleichspannung von 38V versorgt. Vor dem Dreipunktregler 62 weist die Versorgungsschaltung eine Ballastschaltung 63 auf, welche die Spannung auf einen Wert von weniger als 50V, z.B. auf eine Grenzspannung von 45V beschränkt und bei Ueberschreiten dieses Wertes leitend wird und überschüssige Leistung aufnimmt. Der Dreipunktregler 62 ist durch eine Diode 64 in Gegenrichtung überbrückt, welche die bei manuellem Verschieben des Wagens 10 vom Antriebsmotor 36 erzeugte Spannung auf die Ballastschaltung 63 leitet.

Die Ballastschaltung 63 weist (Fig. 7) zwei hintereinandergeschaltete Transistoren 65, 66 auf, von denen der erste Transistor 65 über eine Zenerdiode 67 angesteuert wird und der zweite Transistor 66 mit einem Ballastwiderstand 68 in Reihe liegt. Wird die Grenzspannung erreicht, so wird die Zenerdiode 67 leitend und damit auch die Transistoren 65 und 66, so dass Strom durch den Ballastwiderstand 68 fliesst, wo überschüssige Leistung in Wärme umgesetzt wird. Die Leistungsaufnahme des Wagens 10 bleibt dadurch weitgehend konstant. Parallel zum Antriebsmotor 36 ist ein weiterer Dreipunktregler 69 vorgesehen, der eine Ausgangsspannung von 12V für den Umstellmotor 41 erzeugt. Parallel zu demselben ist ein weiterer Dreipunktregeler vorgesehen (nicht dargestellt), der eine Spannung von 5V für die Bordelektronik des Wagens 10 erzeugt.

Ebenfalls dem Sekundärschwingkreis nachgeschaltet ist eine Decoderschaltung 70, welche aus der von der Sekundärwicklungsanordnung 61 aufgenommenen Wechselspannung allfällige Steuersignale extrahiert und decodiert und in geeigneter Form an die Steuerelektronik des Antriebsmotors 36 und des Umstellmotors 41 leitet und damit entsprechende Umschaltungen des Betriebszustandes auslöst. Die Befehle werden wie erwähnt durch Steuersignale übermittelt, die im Pilotsignal codiert sind. So können z.B. 8-bit-Wörter im erweiterten RC5-Code übertragen werden. Dabei wird ein positives Signal jeweils durch je vier abwechselnde Anhebungen und Absenkungen der Frequenz um 10kHz gegenüber der Grundfrequenz von 185kHz dargestellt, welche durch eine PLL-Schaltung der Decoderschaltung 70 registriert werden. Eine Folge positives Signal - kein Signal stellt '0' dar, die umgekehrte Reihenfolge '1'. Daneben kann sie auch von einer Photodiode 71 des Infrarotempfängers 48 aufgenommene Signale decodieren. Es kann auch vorgesehen sein, dass über Funk übermittelte Signale von einer Antenne aufgefangen und der Decoderschaltung 70 zugeleitet und von derselben ebenfalls decodiert werden. Die Decoderschaltung 70 ist mit den auf den Gleichrichter 45 folgenden Teilen der Bordelektronik in der Steuerkarte 46 integriert.

Durch das von der Piloteinheit 57 ausgehende Pilotsignal, das allen Generatorschaltungen 54 zugleitet wird, wird sichergestellt, dass die von denselben erzeugten Speisespannungen gleiche Frequenz und Phase haben. Die von ihnen erzeugten Wechselströme sind ebenfalls weitgehend in Phase. Durch die induktive Kopplung mit dem Wagen werden zwar variable Phasenverschiebungen derselben erzeugt, die jedoch stets kleiner als 45° sind. Die Kapazität des Kondensators 53 ist so bemessen, dass die Resonanzfrequenz des Primärschwingkreises von der Grundfrequenz von 185kHz abweicht, vorzugsweise um mindestens 4%. Sie kann z.B. 207kHz betragen. Dadurch wird sichergestellt, dass die Energieaufnahme jeder der Primärwicklungsanordnungen 52 bei Abwesenheit eines Wagens 10 gering bleibt.

Andererseits ist die Kapazität des Kondensators 51 so bemessen, dass die Resonanzfrequenz des aus dem Primärschwingkreis und dem induktiv mit ihm gekoppelten Sekundärschwingkreis bestehenden Systems im wesentlichen der Grundfrequenz von 185kHz entspricht, jedenfalls dann, wenn die Sekundärwicklungsanordnung 61 voll mit der Primärwicklungsanordnung 52 in Deckung, d.h. maximal an sie gekoppelt ist. So ist die Leistungsaufnahme des Wagens 10 am grössten. Die Resonanzfrequenz des Sekundärschwingkreises allein beträgt z.B. 192kHz. Bei der beschriebenen Ausbildung des Primärschwingkreises und des Sekundärschwingkreises halten sich Streu- und Ummagnetisierungsverluste in einem vertretbaren Rahmen. Die beiden U-Profile 14a,b sind magnetisch nur sehr schwach - im wesentlichen nur über die Schwellen 19 und Stützprofile 22a,b - verbunden.

Der Wagen 10 kann verschiedene Betriebszustände annehmen, z.B. Antriebsräder 38 abgehoben und Antriebsräder 38 im Eingriff, die über durch Steuerung des Umstellmotors 41 eingestellt werden und im letzteren Fall ausserdem fünf seinen Bewegungszustand festlegende Betriebszustände, die über den Antriebsmotor 36 eingestellt werden, nämlich Stillstand, Fahren vorwärts/rückwärts schnell/langsam. 'schnell' oder 'hohe Geschwindigkeit' kann dabei jeweils 0,2m/s bedeuten, 'langsam' oder 'niedrige Geschwindigkeit' 0,01m/s. Beschleunigen und verzögern erfolgen dabei jeweils mit definierter Rampe.

Die Steuerung kann so angelegt sein, dass bestimmte Befehle die Umschaltung von einem Betriebszustand in einen anderen bewirken oder auch so, dass der Wagen 10 automatisch in einen Grundzustand, vorzugsweise 'Stillstand' fällt, wenn nicht ein Befehl, in einen anderen Zustand überzugehen oder in ihm zu bleiben, in regelmässigen Abständen wiederholt wird. Dies entspricht einer Totmannsfunktion und bewirkt das Anhalten des Wagens 10 im Fall eines Defekts.

Ein wesentlicher Schritt ist etwa das Anfahren einer bestimmten Zielposition: der Wagen 10 erhält dazu den Befehl, auf hohe Geschwindigkeit zu beschleunigen und dann weiterzufahren, bis er eine bestimmte Strecke zurückgelegt hat und anschliessend auf niedrige Geschwindigkeit zu verzögern. Die Strecke ist so berechnet, dass die Verzögerung vor dem Erreichen der Zielposition beendet ist. Dann wird mit niedriger Geschwindigkeit weitergefahren, bis die Zielposition erreicht ist.

Ist die Zielposition eine durch einen Strichcode gekennzeichnete Referenzposition, was sich bei hohen Präzisionsanforderungen wie z. B. beim Anfahren einer Schiebebühne 6 empfiehlt, so wird die Bewegung sofort beendet, wenn der entsprechende Strichcodeleser 47 anspricht. Ist es eine auf dem Wagen 10 transportierte Rolle 11, die in eine bestimmte Position gebracht werden soll, so kann bereits bei der Festlegung der Zielposition einer vorgängig festgestellten Längsversetzung der Rolle Rechnung getragen werden oder, falls eine Referenzposition angefahren wurde, der Wagen 10 anschliessend zum Ausgleich der Längsversetzung mit niedriger Geschwindigkeit entsprechend vorwärts oder rückwärts verfahren werden. Tritt ein Hindernis auf, so schlägt sich dies in einem Stillstand des Wagens bei hohem Stromverbrauch nieder, was von der Bordelektronik festegestellt wird. Der Wagen 10 wird dann in den Betriebszustand 'Stillstand' umgeschaltet.

Der Wagen kann auch im Tippbetrieb, d.h. von einer Bedienungsperson über Infrarot-Fernbedienung gesteuert werden. Sind die Antriebsräder 38 in Nichteingriffsposition, so kann der Wagen 10 verhältnismässig leicht mit der Hand verschoben werden.

### Bezugszeichenliste

- 1a,b,c,d: Schienenabschnitte
- 2a,b,c,d: Drehscheiben
- 3: Schienenabschnitt
- 4a,b,c,e: Stichbahnen
- 5: Schienenabschnitt
- 6: Schiebebühne
- 7: Rollenständer
- 8: Schienenabschnitt
- 9: Schienenabschnitt
- 10: Wagen
- 11: Papierrolle
- 12: Abfallbehälter
- 13: Grube
- 14a,b: U-Profil
- 15: Steg
- 16: unterer Flansch
- 17: oberer Flansch
- 18: Kunststoffprofil
- 19: Schwelle
- 20: Stellschraube
- 21: Winkel
- 22a,b: Stützprofile
- 23: Stützprofil
- 24: Längsprofil
- 25a,b: Abdeckplatten
- 26: Spalt
- 27: Grundplatte
- 28: Primärwicklung
- 29: Gehäuse
- 30: Achse
- 31: Achse
- 32: Räder
- 33: Steg
- 34: Mulde
- 35: Wippe
- 36: Antriebsmotor
- 37: Getriebe
- 38: Antriebsräder
- 39: Andrückfeder
- 40: Keil
- 41: Umstellmotor
- 42: Spindel
- 43: Rolle
- 44: Feststellschraube
- 45: Gleichrichter
- 46: Steuerkarte
- 47: Strichcodeleser
- 48: Infrarotempfänger
- 49: Trägerplatte
- 50: Sekundärwicklung
- 51: Kondensator
- 52: Primärwicklungsanordnung
- 53: Kondensator
- 54: Generatorschaltung
- 55: Speisegerät
- 56: Bus
- 57: Piloteinheit
- 58: Treiberschaltung
- 59: Feldeffekttransistor
- 60: Steuereinheit
- 61: Sekundärwicklungsanordnung
- 62: Dreipunktregler
- 63: Ballastschaltung
- 64: Diode
- 65: Transistor
- 66: Transistor
- 67: Zenerdiode
- 68: Ballastwiderstand
- 69: Dreipunktregler
- 70: Decoderschaltung
- 71: Photodiode

## Patentansprüche

1. Schienenanordnung mit mindestens einem Schienenabschnitt (1a, 1b, 1c, 1d, 3, 5, 8,9) mit einer Mehrzahl in Längsrichtung aufeinanderfolgender gleichsinnig gewickelter Primärwicklungen (28), **dadurch gekennzeichnet, dass** sie eine Piloteinheit (57) umfasst, welche ein Pilotsignal in Form einer Wechselspannung, deren Frequenz normalerweise einer Grundfrequenz entspricht, erzeugt sowie eine Mehrzahl von Generatorschaltungen (54), deren jede mit der Piloteinheit (57) permanent verbunden ist, derart, dass sie in Abhängigkeit vom Pilotsignal Speisespannungen gleicher Frequenzen und Phasenlagen erzeugen, sowie jeweils mit einer Primärwicklungsanordnung (54), derart, dass dieser die Speisespannung zugeführt wird.

2. Schienenanordnung nach Anspruch 1, **dadurch gekennzeichnet, dass** die Generatorschaltungen (54) über die Schienenanordnung verteilt sind, derart, dass jeweils die Länge der Verbindung zwischen einer Generatorschaltung (54) und der von demselben gespeisten Primärwicklungsanordnung (52) eine Maximallänge, die vorzugsweise nicht grösser als 5m ist, nicht überschreitet.

3. Schienenanordnung nach Anspruch 1 oder 2, **dadurch gekennzeichnet, dass** die Grundfrequenz zwischen 100kHz und 300kHz liegt.

4. Schienenanordnung nach einem der Ansprüche 1 bis 3, **dadurch gekennzeichnet, dass** jeder Primärwicklungsanordnung (52) ein Kondensator (53) parallelgeschaltet ist, dessen Kapazität derart bemessen ist, dass die Resonanzfrequenz eines die Primärwicklungsanordnung (52) und den Kondensator (53) umfassenden Primärschwingkreises von der Grundfrequenz des Pilotsignals abweicht, vorzugsweise um mindestens 4%.

5. Schienenanordnung nach einem der Ansprüche 1 bis 4, **dadurch gekennzeichnet, dass** mindestens eine Primärwicklungsanordnung (52) zwei in Längsrichtung des Schienenabschnittes aufeinanderfolgende Primärwicklungen (28) umfasst.

6. Schienenanordnung nach einem der Ansprüche 1 bis 5, **dadurch gekennzeichnet, dass** die Länge jeder Primärwicklung (28) in Längsrichtung des Schienenabschnittes zwischen 0,8m und 2m beträgt.

7. Schienenanordnung nach einem der Ansprüche 1 bis 6, **dadurch gekennzeichnet, dass** die Primärwicklungen (28) in der gleichen Ebene liegen und gleichsinnig gewickelt sind.

8. Schienenanordnung nach einem der Ansprüche 1 bis 7, **dadurch gekennzeichnet, dass** sie eine Steuereinheit (60) umfasst, welche Steuersignale erzeugt, welche dem Pilotsignal überlagert sind.

9. Schienenanordnung nach Anspruch 8, **dadurch gekennzeichnet, dass** die Steuersignale binär sind und dass mindestens einer der binären Werte durch vorübergehende Abweichung oder Abweichungen der Frequenz des Pilotsignals von der Grundfrequenz dargestellt wird.

10. Schienenanordnung nach einem der Ansprüche 1 bis 9, **dadurch gekennzeichnet, dass** die Speisespannung jeweils höchstens 1'000V beträgt.

11. Schienenanordnung nach einem der Ansprüche 1 bis 10, **dadurch gekennzeichnet, dass** der mindestens eine Schienenabschnitt zwei gegeneinander weisende, voneinander beabstandete U-Profile (14a, 14b) umfasst, zwischen deren unteren Schenkeln (16), deren Innenseiten Laufflächen bilden, jeweils die Primärwicklungen (28) in einer waagrechten Ebene angeordnet sind.

12. Schienenanordnung nach Anspruch 11, **dadurch gekennzeichnet, dass** die U-Profile (14a, 14b) magnetisch höchstens schwach verbunden sind.

13. Schienenanordnung nach Anspruch 11 oder 12, **dadurch gekennzeichnet, dass** die Primärwicklungen (28) in länglichen Grundplatten (27) aus isolierendem Material eingelassen sind.

14. Wagen zum Gebrauch auf einer Schienenanordnung nach einem der Ansprüche 1 bis 13, mit einer Sekundärwicklungsanordnung (61) zur induktiven Stromaufnahme von den Primärwicklungsanordnungen (52), einer der Sekundärwicklungsanordnung (61) nachgeschalteten Versorgungsschaltung und einem von derselben gespeisten elektrischen Antriebsmotor (36) sowie einer durch denselben antreibbaren, Antriebsräder (38) tragenden Antriebsachse, **dadurch gekennzeichnet, dass** der Wagen (10) eine Ballastschaltung (63) aufweist, welche wenn nötig so viel Leistung aufnimmt, dass die Leistungsaufnahme des Wagens (10) im wesentlichen konstant bleibt.

15. Wagen nach Anspruch 14, **dadurch gekennzeichnet, dass** die Ballastschaltung (63) dem Antriebsmotor (36) vorgeschaltet ist und von einem Sperrzustand in einen leitenden Zustand übergeht, wenn die Spannung eine Grenzspannung erreicht.

16. Wagen nach Anspruch 14 oder 15, **dadurch gekennzeichnet, dass** die Grenzspannung höchstens 50V beträgt.

17. Wagen nach einem der Ansprüche 15 bis 16, **dadurch gekennzeichnet, dass** er eine Decoderschaltung (70) für Schaltsignale aufweist und aufgrund empfangener Schaltsignale zwischen mehreren Betriebszuständen umschaltbar ist.

18. Wagen nach Anspruch 17, **dadurch gekennzeichnet, dass** er einen Grundzustand, in welchem er vorzugsweise stillsteht, annimmt, falls er während einer bestimmten Zeitspanne kein Schaltsignal empfangen hat.

19. Wagen nach Anspruch 17 oder 18, **dadurch gekennzeichnet, dass** die Decoderschaltung (70) geeignet ist, über die Sekundärwicklungsanordnung (61) aufgenommene Schaltsignale zu verarbeiten.

20. Wagen nach einem der Ansprüche 17 bis 19, **dadurch gekennzeichnet, dass** er einen Funk- oder Infrarotempfänger (48) aufweist und die Decoderschaltung (70) geeignet ist, über denselben aufgenommene Schaltsignale zu verarbeiten.

21. Wagen nach einem der Ansprüche 14 bis 20, **dadurch gekennzeichnet, dass** die Antriebsachse heb- und senkbar ist, derart, dass an derselben angebrachte Antriebsräder (38) gegen Abrollflächen der Schienenanordnung gepresst oder von denselben abgehoben werden können.

22. Wagen nach Anspruch 21, **dadurch gekennzeichnet, dass** die Antriebsachse an einer Wippe (35) befestigt ist, welche gegen die Kraft einer Andrückfeder (39) in eine Nichteingriffsposition schwenkbar ist, in welcher die Antriebsräder (38) abgehoben sind.

23. Wagen nach Anspruch 22, **dadurch gekennzeichnet, dass** die zur Verschwenkung der Wippe (35) ein auf dieselbe einwirkender Keil (40) vorgesehen ist, der mittels eines Umstellmotors (41) gegen dieselbe vor und von ihr zurückziehbar ist.

24. Wagen nach einem der Ansprüche 14 bis 23, **dadurch gekennzeichnet, dass** die Sekundärwicklungsanordnung (61) in einer Trägerplatte (49) aus isolierendem Material an der Unterseite des Wagens (10) eingelassen ist.

25. Transportanlage mit einer Schienenanordnung nach einem der Ansprüche 1 bis 13 und mindestens einem Wagen (10) nach einem der Ansprüche 14 bis 24.

26. Transportanlage nach Anspruch 25, **dadurch gekennzeichnet, dass** die Resonanzfrequenz des vom Primärschwingkreis und dem über die induktive Kopplung zwischen der Primärwicklungsanordnung (52) und der Sekundärwicklungsanordnung (61) an denselben gekoppelten Sekundärschwingkreis gebildeten Schwingkreises im wesentlichen der Grundfrequenz des Pilotsignals entspricht.

27. Transportanlage nach Anspruch 26, **dadurch gekennzeichnet, dass** die Abweichung der Resonanzfrequenz von der Grundfrequenz höchstens 1% beträgt.
